Europäisches Patentamt

European Patent Office

Office européen des brevets

(11) Veröffentlichungsnummer: **0 304 992**

**A2**

(12) **EUROPÄISCHE PATENTANMELDUNG**

(21) Anmeldenummer: **88201747.8**

(22) Anmeldetag: **16.08.88**

(51) Int. Cl.⁴: **G11B 11/10 , G11B 13/04**

(30) Priorität: **25.08.87 DE 3728237**

(43) Veröffentlichungstag der Anmeldung:
**01.03.89 Patentblatt 89/09**

(84) Benannte Vertragsstaaten:
**DE FR GB IT NL**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB IT NL**

(72) Erfinder: **Crasemann, Jan Hinrich**
**Blütenweg 11**
**D-2000 Hamburg 55(DE)**

(74) Vertreter: **Poddig, Dieter, Dipl.-Ing. et al**
**Philips Patentverwaltung GmbH**
**Wendenstrasse 35 Postfach 10 51 49**
**D-2000 Hamburg 1(DE)**

(54) **Verfahren zum Schreiben von binärer Information in eine magnetooptische Speicherschicht und Anordnung zur Durchführung des Verfahrens.**

(57) Bei löschbaren magnetooptischen Speicherschichten wird beim Lesen eine Verbesserung des Signal-Rausch-Verhältnisses erfindungsgemäß dadurch erreicht, daß der Laserimpuls beim Schreiben in eine Folge kurzer Impulse aufgelöst wird, wobei zweckmäßig die Pausen zwischen den einzelnen Impulsen gleich der Impulsdauer ist.

Fig.1

## Verfahren zum Schreiben von binärer Information in eine magnetooptische Speicherschicht und Anordnung zur Durchführung des Verfahrens

Die Erfindung betrifft ein Verfahren zum Schreiben von binärer Information in eine magnetooptische Speicherschicht mit Hilfe eines Laserstrahls zeitlich begrenzter Dauer für jeweils ein Bit, indem durch den Laserstrahl eine ausgewählte Stelle der Speicherschicht bis in die Nähe der Curie-Temperatur erwärmt wird, sowie eine Anordnung zur Durchführung des Verfahrens.

Magnetooptische Speicherschichten bestehen aus einem ferrimagnetischen Material, das häufig mit weiteren dielektrischen Schichten auf einem Substrat aus Glas oder Kunststoff aufgebracht ist. Die Speicherschicht ist in einer Richtung senkrecht zur Schichtebene vormagnetisiert, und die Richtung der Magnetisierung kann durch ein äußeres Magnetfeld umgekehrt werden. Dieses Magnetfeld braucht nur eine geringe Stärke zu haben, wenn das Material der Speicherschicht bis in die Nähe der Curie-Temperatur aufgewärmt ist.

Zum Speichern von binären Informationen an einer Stelle der magnetooptischen Speicherschicht wird diese Stelle durch einen fokussierten Laserstrahl bis in die Nähe der Curie-Temperatur erwärmt, und durch ein externes statisches Magnetfeld kann die Magnetisierung innerhalb des erwärmten Volumens der Speicherschicht umgeschaltet und eine magnetische Domäne erzeugt werden. Das Auslesen der Information erfolgt über den Kerr-Effekt, der eine Änderung des Polarisierungszustandes des von der Platte reflektierten Lichtes in Abhängigkeit von der Magnetisierungsrichtung der Speicherschicht bewirkt. Der binäre Wert der Information kann dabei also durch Auswertung der Polarisationsrichtung des von der Speicherschicht reflektierten Lichtes erhalten werden.

Ein Verfahren der eingangs genannten Art für eine rotierende Speicherschicht ist beispielsweise bekannt aus "PHILIPS Technical Review", Vol. 42, No. 2, August 1985, Seiten 37 bis 47. Dabei wird die binäre Information zunächst derart in Kanal-Bits umgewandelt, daß mindestens drei Bits mit gleichem binären Wert aufeinander folgen, wie aus der dabei zitierten Literaturstelle "PHILIPS Technical Review", Vol. 40, Nr. 6, 1982, Seiten 157 bis 164 hervorgeht. Jedes Bit wird mit einem Laserstrahl begrenzter Zeitdauer in die Speicherschicht eingeschrieben, und die Bits folgen derart dicht aufeinander, daß die Auftreffbereiche der zugehörigen Laserstrahlen für benachbarte Bits sich teilweise überlappen. Dadurch entstehen in der Speicherschicht zusammenhängende magnetische Domänen unterschiedlicher Länge.

Die Zuverlässigkeit, mit der der Wert einer gespeicherten Information wieder ausgelesen werden kann, wird durch das Signal-Rausch-Verhältnis bestimmt, das möglichst groß sein soll. Dieses Signal-Rausch-Verhältnis, kurz mit SNR bezeichnet, hängt u.a. auch von den Vorgängen beim Einschreiben der Information ab, insbesondere von der Energie bzw. der Energiedichte des fokussierten Laserstrahls an der Stelle, an der die Information eingeschrieben werden soll, d.h. die erwärmt werden soll. Es wurde in Untersuchungen der Anmelderin festgestellt, daß der SNR-Wert mit steigender Strahlenergie steigt, jedoch bald einem Grenzwert zustrebt. Der Anstieg und das Erreichen des Grenzwertes erfolgen früher, je kürzer der Impuls ist, mit dem eine bestimmte Laserenergie auf die zu erwärmende Stelle der Speicherschicht gebracht wird. Insbesondere wegen der begrenzten Laserleistung können untere Grenzen der Impulsdauern nicht unterschritten werden, da auch eine Mindestenergie erforderlich ist, um an der einzuschreibenden Stelle das Volumen ausreichend zu erwärmen.

Aufgabe der Erfindung ist es, ein höheres Signal-Rausch-Verhältnis SNR zu erreichen, ohne Laser mit höherer Impulsleistung zu verwenden.

Diese Aufgabe wird erfindungsgemäß dadurch gelöst, daß jeder Laserstrahl begrenzter Zeitdauer in mehrere kurze, durch Impulspausen getrennte Impulse aufgeteilt wird, die zum wesentlichen Teil dieselbe ausgewählte Stelle der Speicherschicht treffen und von denen die Energie jedes Impulses ausreicht, die dadurch bestrahlte Stelle der Speicherschicht im wesentlichen bis in die Nähe der Curie-Temperatur zu erwärmen.

Der Erfindung liegt im wesentlichen die Erkenntnis zugrunde, daß bei einem kürzeren Laser-Impuls die Wärmeverteilung enger ist und somit steilere Gradienten der Temperaturverteilung erreicht werden, so daß die Domänengrenzen schärfer werden. Bei einem kurzen Impuls mit begrenzter Leistung ist nun die Ummagnetisierung gegebenenfalls nicht ganz vollständig, wobei auch Inhomogenitäten der Speicherschicht eine Rolle spielen. Wenn zum Schreiben jeweils eines Bits mehrere kurze Laserstrahlimpulse verwendet werden, die dicht aufeinander folgen und dadurch auch bei einer z.B. schnell rotierenden Laserschicht im wesentlichen dieselbe Stelle treffen, fließt die Wärme nicht so sehr in die Umgebung ab, da in den Pausen eine weitgehende Abkühlung erfolgt. Durch die kurzen Impulse werden jedoch scharfe Ränder der ummagnetisierten Domäne erzeugt, und durch die mehreren Impulse erfolgt schließlich eine vollständigere Ummagnetisierung, sofern die einzelnen Impulse eine Mindestenergie überschreiten. Dadurch wird insgesamt ein höherer Kontrast, d.h. ein höherer SNR-Wert erreicht. Bei einer vorgegebenen Geschwindigkeit der Relativbewegung der Speicherschicht bezüglich des Laserstrahls erfolgt zwar eine gewisse Vergrößerung der jeweils ein Bit darstellenden ummagnetisierten Domäne durch die Verwendung mehrerer Impulse mit einem Abstand dazwischen, ähnlich wie bei dem genannten bekannten Verfahren durch die dichte Aufeinanderfolge mehrerer Bits, jedoch ist hier diese Vergrößerung geringfügig, denn die Auftreffstellen der für nur ein Bit erzeugten einzelnen Impulse müssen sich alle zum größten Teil überlappen, damit sich die vorher beschriebene Wirkung einstellt. Außerdem wird durch die geringfügige Vergrößerung der Domänen die Speicherdichte nicht wesentlich negativ beeinflußt, da wie erwähnt die Domänenränder schärfer sind und andererseits die Verhältnisse beim Auslesen günstiger werden, da es dann leichter ist, den Laserstrahl beim Lesen vollständig auf die Domäne zu richten.

Die Erfindung wirkt sich auch vorteilhaft beim Löschen von Daten aus. Verursacht durch den hohen Temperaturgradienten bei kurzen Impulsen und die dadurch erfolgende raschere Abkühlung der erwärmten Stelle der Speicherschicht wird auch beim Löschen von Daten die Gefahr eines eventuellen Mitlöschens oder Auslöschens von eng benachbarten Stellen in der Speicherschicht verringert. Dies gilt im besonderen Maße bei einer langsamen Relativbewegung zwischen der Speicherschicht und dem Laserstrahl.

Die einzelnen aufeinanderfolgenden Impulse und die Pausen dazwischen können für optimale Ergebnisse unterschiedlich lang sein. Eine ausreichende Verbesserung gegenüber Einzelimpulsen wird jedoch nach einer Ausgestaltung der Erfindung dadurch erreicht, daß die Impulse und die Impulspausen im wesentlichen gleich lang sind. Derartige Impulse sind sehr leicht zu erzeugen und lassen in den Impulspausen eine ausreichende Abkühlung der erwärmten Stelle zu, so daß scharf begrenzte magnetische Domänen erhalten werden.

Eine Anordnung zur Durchführung des erfindungsgemäßen Verfahrens mit einem von einer Quelle binärer Information steuerbaren Laser ist dadurch gekennzeichnet, daß zwischen der Informationsquelle und dem Laser ein Impulsgenerator zur Erzeugung einer vorgegebenen Anzahl Steuerimpulse vorgegebener Länge und Abstand aus jedem Informationssignal angeordnet ist und die Steuerimpulse den Laser ansteuern. Derartige Impulsgeneratoren sind bekannt und leicht aufzubauen.

Ausführungsbeispiele der Erfindung werden nachstehend anhand der Zeichnung näher erläutert. Es zeigen:

Fig. 1 schematisch eine vollständige Speicheranordnung mit einer magnetooptischen Speicherschicht auf einer rotierenden Platte,

Fig. 2 den Aufbau magnetooptischen Speicherschicht und der benachbarten Schichten auf der rotierenden Platte,

Fig. 3 das Signal-Rausch-Verhältnis SNR bei verschiedenen Laserenergien und Laserimpulsdauern,

Fig. 4 ein Diagramm mit der Erhöhung des SNR-Wertes bei mehreren kurzen Impulsen.

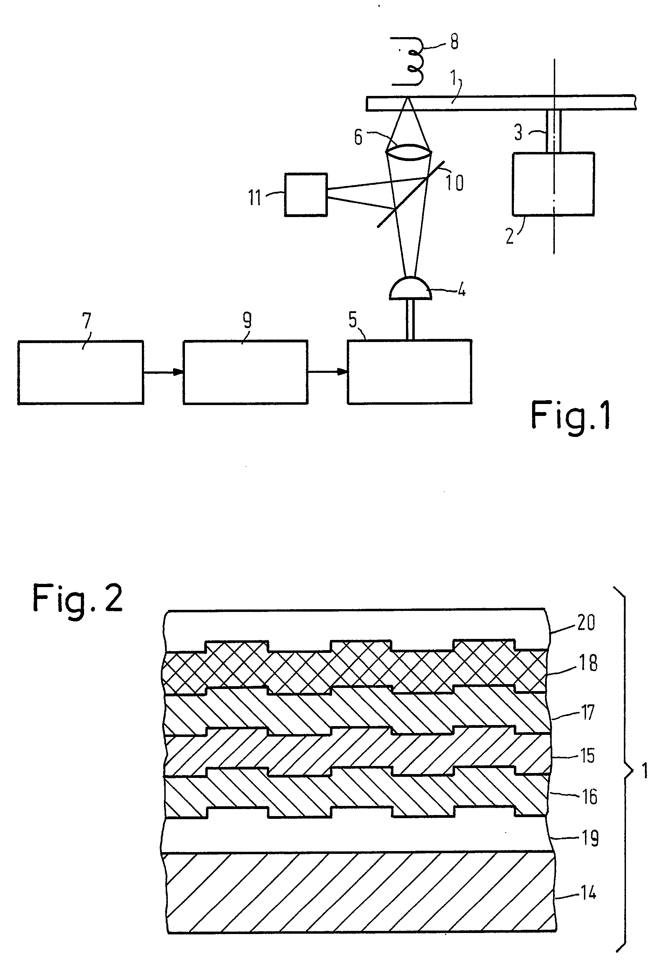

In Fig. 1 ist eine Platte 1 dargestellt, die eine magnetooptische Speicherschicht trägt und von einem Motor 2 um eine Achse 3 vorzugsweise ständig gedreht wird. Ein Laser 4, der zweckmäßig als Halbleiterlaser ausgebildet ist und der von einer steuerbaren Energiequelle 5 angesteuert wird, sendet einen Lichtstrahl aus, der von einer Optik 6 auf die Platte 1, insbesondere auf die magnetooptische Speicherschicht darauf fokussiert wird. Die steuerbare Energiequelle 5 schaltet die Leistung des Lasers 4, die während der meisten Betriebszeit nur gering ist und zum Auslesen der in der magnetooptischen Speicherschicht gespeicherten Information ausreicht, bei Ansteuerung auf einen hohen Wert, der die Speicherschicht an der vom fokussierten Laserstrahl getroffenen Stelle in die Nähe der Curie-Temperatur erwärmt, und durch ein gleichzeitig mittels der Spule 8 erzeugtes Magnetfeld wird die Magnetisierungsrichtung der erwärmten Stelle der Speicherschicht umgeschaltet. Die Ansteuerung der steuerbaren Energiequelle 5 erfolgt durch eine Datenquelle 7, die die einzuspeichernden Informationen liefert, über eine Schaltung 8, die später erläutert wird. Beim Auslesen der in die magnetooptische Speicherschicht eingeschriebenen Information wird der reflektierte Laserstrahl über den teilweise durchlässigen Spiegel 10 ausgeblendet und einem Detektorelement 11 zur Auswertung des Polarisationszustandes zugeführt.

Die Fig. 2 zeigt einen Querschnitt durch die Platte 1 in Fig. 1. Diese besteht insbesondere aus einer Trägerplatte 14 aus beispielsweise Glas von ca. 1,2 mm Dicke , die mit einer dünnen Fotolackschicht 16 von ca. 2 μm Dicke bedeckt ist. In dieser Fotolackschicht ist eine Grabenstruktur aus konzentrischen Ringen oder einer spiralförmigen Rille angebracht, vorzugsweise mittels eines stempelartigen Werkzeugs, unter dem die Fotolackschicht ausgehärtet wird, wonach das Werkzeug entfernt wird. Stattdessen kann die Grabenstruktur auch direkt in das Glassubstrat 14 eingeätzt werden, wobei dann keine Fotolackschicht verwendet wird, jedoch ist diese Herstellungsmethode allgemein aufwendiger.

Als nächstes folgt in der Fig. 2 eine etwa 80 bis 90 nm dicke Schicht 16 aus Aluminiumnitrid, auf der dann die eigentliche magnetooptische Speicherschicht 15 mit einer Dicke von 30 bis 50 nm angebracht ist, die beispielsweise die Zusammensetzung GdTbFe, TbFeCo oder GdTbFeCo hat. Es können auch andere bekannte magnetooptische Speicherschichten verwendet werden. Diese ist wieder von einer z.B. 30 nm dicken Schicht 17 aus Aluminiumnitrid bedeckt, und als letztes folgt eine dünne Schicht 18 aus metallischem Aluminium. Die Schicht 17 kann auch weggelassen werden und dient dazu, die thermische Empfindlichkeit der Speicherschicht zu erhöhen. Beim Auslesen wird die Polarisationsrichtung des die Speicherschicht 15 zweimal durchdringenden Laserlichts wegen der Reflektion an der Schicht 18 aus metallischem Aluminium durch den Faraday-Effekt gedreht, so daß insgesamt eine stärkere Drehung der Polarisation im reflektierten Laserstrahl, als bei einfachem Kerr-Effekt zu erwarten ist, auftritt. Die Aluminiumschicht 18 ist noch mit einem Decklack 20 bedeckt, der die Aluminiumschicht gegen die Umwelt schützen soll, insbesondere gegen mechanische Einwirkungen und gegen Feuchtigkeit. Die Breite der Gräben in der Struktur beträgt etwa 1,6 μm, d.h. etwas größer als die beim Schreiben erzeugten magnetischen Domänen, deren Größe wiederum von dem Durchmesser des fokussierten Laserstrahls, den thermischen Eigenschaften der beschriebenen Schichtstruktur und den magnetischen Eigenschaften der Speicherschicht abhängt.

Die magnetooptische Speicherschicht 15 ist senkrecht zur Schicht in einer einheitlichen Richtung vormagnetisiert, beispielsweise in Fig. 2 senkrecht nach unten gerichtet, und beim Einschreiben wird durch einen fokussierten Laserstrahl höherer Leistung eine Stelle in einem Graben erwärmt, bis etwa die Curie-Temperatur erreicht ist, und durch ein äußeres Magnetfeld wird dieser Bereich, d.h. das Volumen der magnetooptischen Speicherschicht an dieser Stelle umgeschaltet, d.h. in eine Richtung senkrecht nach oben im angenommenen Beispiel. Die Größe der Domäne hängt u.a. von der Gesamtenergie des Laserstrahls ab, die von dem entsprechenden Volumen der magnetischen Speicherschicht 15 aufgenommen wird, und dies ist wieder ein fester Bruchteil der zugeführten Laserenergie. Bei einer höheren Energie tritt zwar eine höhere Temperatur des erwärmten Volumens auf, wodurch ein vollständigeres magnetisches Umschalten des Volumens erreicht wird, jedoch fließt dann auch Wärme in benachbarte Bereiche ab, so daß die schließlich entstehende Domäne größer ist als durch die Größe des fokussierten Laserstrahls bedingt. Insbesondere geht auch sehr stark die Zeitdauer in die Größe der Domäne ein, während der der Laserstrahl hoher Energie auf die Schreibstelle gerichtet ist, da ein langer Impuls eine breitere Temperaturverteilung erzeugt und eine Domäne mit unregelmäßigem Rand bildet. Diese ergibt beim Lesen ein stärker verrauschtes Signal, so daß die Rückgewinnung der Information erschwert ist.

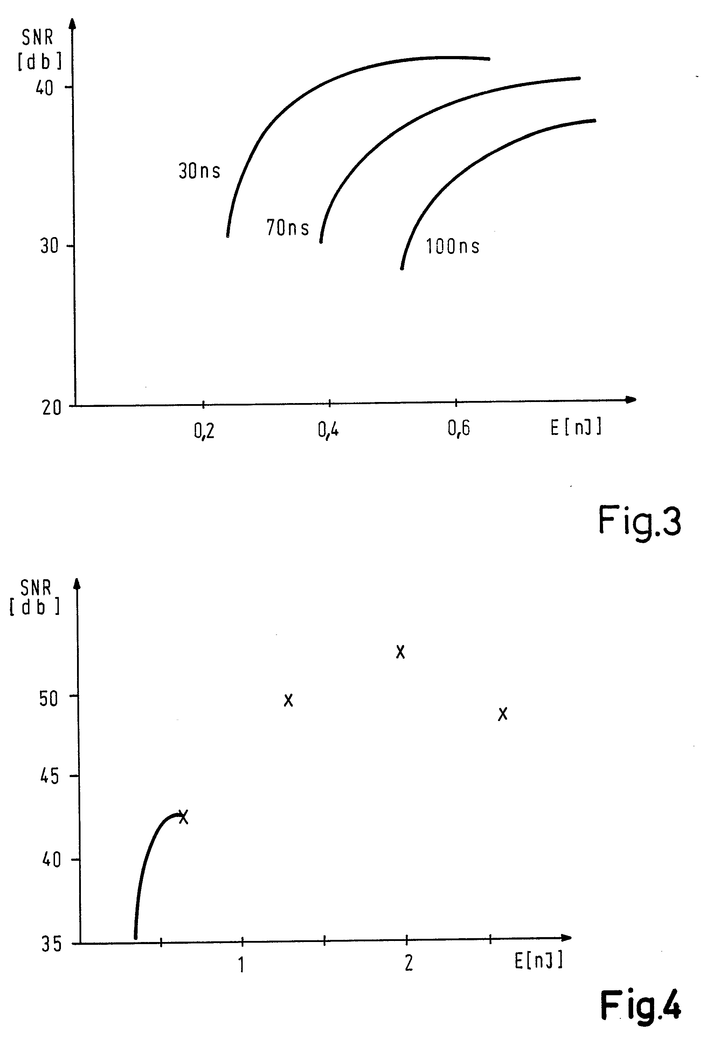

In Fig. 3 sind die SNR-Werte dargestellt, die sich bei verschiedenen Laserstrahlenergien für verschiedene Impulslängen ergeben, wobei die SNR-Werte in dB und die Energie in nJ pro Laserstrahlimpuls angegeben ist. Es sind die SNR-Werte für drei verschiedene Impulslängen angegeben, und zwar für 30 ns, 70 ns und 100 ns, und zwar in den Kurven von links nach rechts. Es ist zu erkennen, daß mit steigender Impulslänge höhere Energien für gleiche SNR-Werte erforderlich sind, was auf etwa gleiche Leistung des Laserstrahls beim Einschreiben hinausläuft, außer bei einer Impulsdauer von 30 ns, wo eine etwas höhere Leistung erforderlich ist. Insgesamt ist jedoch zu erkennen, daß das SNR mit steigender Energie einem Sättigungswert zustrebt, der für kürzere Impulse höher liegt als für längere Impulse. Eine beliebige Verkürzung der Laserstrahlimpulse ist jedoch schon deswegen nicht ohne weiteres möglich, da bei kürzeren Impulsen eine höhere Leistung erforderlich ist, um auf diejenige Energie zu kommen, bei der die Sättigung der SNR-Werte etwa eintritt, und die Leistung der zur Verfügung stehenden preisgünstigen Laser ist begrenzt, beispielsweise bei etwa 23 mW auf der Speicherplatte.

Eine Verbesserung des SNR kann bei gegebener Laserleistung jedoch dadurch erreicht werden, daß erfindungsgemäß mehrere kurze Laserimpulse dicht aufeinanderfolgend zum Schreiben eines einzigen Informationsbits verwendet werden. Dies ist in Fig. 4 dargestellt, wo die linke Kurve wieder die SNR-Werte der Fig. 3 zeigt, die bei einer Impulsdauer des Laserstrahls von 30 ns mit steigender Laserstrahlenergie erhalten werden. Zusätzlich wird das SNR bei Verwendung mehrerer Impulse mit der durch ein Kreuz angegebenen maximalen Energie der linken Kurve gezeigt, die mit einem Abstand etwa gleich der Impulslänge aufeinanderfolgen, und zwar bei zwei, drei und vier Impulsen, d.h. bei der zweifachen, dreifachen und vierfachen Laserstrahlenergie, die derselben Domäne zugeführt wird. Es ist zu erkennen, daß sich eine ganz erhebliche Verbesserung des SNR bei Verwendung von zwei Impulsen und noch mehr bei drei Impulsen ergibt, während bei vier Impulsen bereits wieder eine Verschlechterung des SNR eintritt. Die optimale Anzahl der Laserstrahlimpulse, d.h. die optimale Gesamtenergie, die hier etwa 2 nJ beträgt, hängt von verschiedenen Bedingungen ab, beispielsweise der Leistung des verwendeten Lasers und den Eigenschaften der verwendeten magnetooptischen Speicherschicht, und läßt sich bei anderen Anwendungsfällen leicht ermitteln. Der optimale SNR-Wert wäre jedoch kleiner, wenn die Impulsenergie von 2 nJ im vorliegenden Beispiel in einem einzigen Impuls von in diesem Falle 90 ns aufgebracht würde.

Die günstigste Anzahl der Laserstrahlimpulse für einen möglichst optimalen SNR-Wert wird auch dadurch beeinflußt, daß durch die Verteilung der Gesamtenergie auf mehrere Impulse mit Impulsabständen dazwischen eine Vergrößerung der Domäne auftritt, wenn die Speicherplatte 1 in Fig. 1 schnell rotiert. Beispielsweise hat sich die Speicherschicht bei einer Umfangsgeschwindigkeit von 5 m/s während eines einzelnen Impulses von 30 ns nur um 0,15 µm bewegt, was gegenüber der durch andere, bereits erwähnte Umstände bedingten Domänengröße von 1,2 µm gering ist. Wenn jedoch drei Impulse von je 30 ns mit jeweils gleich langen Pausen dazwischen verwendet werden, verlängert sich die gesamte Schreibzeit auf 150 ns, wodurch eine wesentliche Verlängerung der Domäne auftritt, d.h. die im ersten Augenblick zugeführte Laserstrahlenergie überschneidet sich nur noch wenig mit der am Ende des letzten Impulses zugeführten Energie, so daß der Bereich, der während der gesamten mehrfachen Impulszeit Laserstrahlenergie erhält, nur klein ist. Durch die kurzen Einzelimpulse und die Pausen dazwischen wird erreicht, daß praktisch nur das bestrahlte Volumen der magnetooptischen Speicherschicht erwärmt wird und ein sehr steiler Temperaturgradient entsteht, so daß die Wärme während des Impulses kaum in die Umgebung abfließt, während andererseits in den Impulspausen eine erhebliche Abkühlung erfolgt, wobei voraus gesetzt ist, daß jeder einzelne Laserstrahlimpuls das Volumen der magnetooptischen Speicherschicht bis in die Nähe der Curie-Temperatur erwärmen kann. Allerdings wird während eines einzelnen Impulses offensichtlich nur eine etwas unvollkommene Ummagnetisierung des erwärmten Volumens der magnetischen Speicherschicht erzeugt, was durch Inhomogenitäten der Speicherschicht verursacht sein kann, und diese Ummagnetisierung wird durch mehrere Impulse, die die gleiche Stelle treffen, vervollständigt, so daß beim Auslesen eine stärkere Drehung der Polarisation des auslesenden Laserstrahls bewirkt wird. Wenn sich jedoch die magnetooptische Speicherschicht während des gesamten Einschreibvorganges um etwa eine Domänenlänge bewegt, verschwindet praktisch der Bereich, in dem quasi übereinander geschrieben wird, so daß dann durch weitere Impulse keine Verbesserung des SNR erreicht werden kann, da die Schärfe der Domänengrenze im wesentlichen durch die Dauer des Einzelimpulses bestimmt sein dürfte.

Die Erzeugung mehrerer Impulse bei einem einzigen einzuschreibenden Informationsbit wird in Fig. 1 dadurch erreicht, daß von dem aus der Datenquelle 7 gelieferten Informationsbit ein Impulsgenerator 9 angesteuert wird, der für jedes Informationsbit mehrere Impulse mit entsprechenden Impulspausen erzeugt und damit die Energiequelle 5 des Lasers 4 ansteuert. Ein derartiger Impulsgenerator kann beispielsweise durch einen Taktgenerator entsprechend hoher Frequenz und einen Zähler gebildet werden, wodurch Impulse und Pausen mit im wesentlichen gleicher Dauer erzeugt werden.

## Ansprüche

1. Verfahren zum Schreiben von binärer Information in eine magnetooptische Speicherschicht mit Hilfe eines Laserstrahls zeitlich begrenzter Dauer für jeweils ein Bit, indem durch den Laserstrahl eine ausgewählte Stelle der Speicherschicht bis in die Nähe der Curie-Temperatur erwärmt wird, dadurch gekennzeichnet, daß jeder Laserstrahl begrenzter Zeitdauer in mehrere kurze, durch Impulspausen getrennte Impulse aufgeteilt wird, die zum wesentlichen Teil dieselbe ausgewählte Stelle der Speicherschicht treffen und von denen die Energie jedes Impulses ausreicht, die dadurch bestrahlte Stelle der Speicherschicht im wesentlichen bis in die Nähe der Curie-Temperatur zu erwärmen.

2. Verfahren nach Anspruch 1, dadurch gekennzeichnet, daß die Impulse und die Impulspausen im wesentlichen gleich lang sind.

3. Anordnung zur Durchführung des Verfahrens nach Anspruch 1 mit einem von einer Quelle binärer Information steuerbaren Laser, dadurch gekennzeichnet, daß zwischen der Informationsquelle und dem Laser ein Impulsgenerator zur Erzeugung einer vorgegebenen Anzahl Steuerimpulse vorgegebener Länge und Abstand aus jedem Informationssignal angeordnet ist und die Steuerimpulse den Laser ansteuern.

Fig.1

Fig.2

Fig.3

Fig.4

2-II-PHD 87-164